# EUROPÄISCHE PATENTSCHRIFT

(11) **EP 4 061 566 B1**
(45) Veröffentlichungstag und Bekanntmachung des Hinweises auf die Patenterteilung: **24.04.2024**
(21) Anmeldenummer: 20811294.6
(22) Anmeldetag: 20.11.2020
(51) Int. Cl.: B22F 10/20, B33Y 40/20, B33Y 30/00, B29C 64/153, B22F 12/47, B22F 12/42, B22F 12/00, B22F 12/20, B22F 12/10, B22F 10/50, B22F 12/13, B22F 12/44, B33Y 10/00, B22F 12/30, B22F 12/45, B22F 12/70

(54) **VORRICHTUNG ZUR ADDITIVEN FERTIGUNG MIT PULVER-LAYER-VERFAHREN**
APPARATUS FOR ADDITIVE MANUFACTURE BY A POWDER-LAYER PROCESS
APPAREIL DE FABRICATION ADDITIVE PAR UN PROCÉDÉ DE COUCHE DE POUDRE

(30) Priorität: 20.11.2019 AT 510042019
(43) Veröffentlichungstag der Anmeldung: 28.09.2022
(73) Patentinhaber: Technische Universität Graz, 8010 Graz (AT); Preworks GmbH, 8510 Stainz (AT); AVL List GmbH, 8020 Graz (AT)
(72) Erfinder: HAAS, Franz, 8510 Stainz (AT); REINBACHER, Andreas, 8511 St. Stefan / Stainz (AT); SAMS, Theodor, 8010 Graz (AT); ASCHAUER, Patrick, 8010 Graz (AT); ERKINGER, Martin, 8111 Straßengel (AT); BRUNBAUER, Gottfried, 4421 Aschach an der Steyr (AT)
(74) Vertreter: KLIMENT & HENHAPEL
(86) Internationale Anmeldenummer: PCT/EP2020/082881
(87) Internationale Veröffentlichungsnummer: WO 2021/099570

(56) Entgegenhaltungen:
- EP-A1- 3 437 765
- EP-A1- 3 628 421
- WO-A1-2009/027078
- US-A1- 2013 015 609
- US-A1- 2016 279 705
- US-A1- 2019 126 536

## Beschreibung

### GEBIET DER ERFINDUNG

Die vorliegende Erfindung betrifft eine Vorrichtung zur additiven Fertigung zumindest eines Werkstücks gemäß dem Oberbegriff des Anspruchs 1.

### STAND DER TECHNIK

Bei der additiven Fertigung - u.a. auch als "3D-Druck", "Additive Manufacturing" oder "Generative Fertigung" bezeichnet - wird Material Schicht für Schicht bzw. Lage für Lage aufgetragen, um so dreidimensionale Gegenstände bzw. Werkstücke zu erzeugen. Unzählige Anwendungen finden sich z.B. in der Industrie, im Heimanwenderbereich oder in der Forschung und Entwicklung.

Typische Werkstoffe für die additive Fertigung sind Kunststoffe, Kunstharze, aber auch Metalle, wobei die Werkstoffe beim schichtweisen Auftragen aufgeschmolzen werden und dann aushärten. Insbesondere bei der additiven Fertigung mit Metallen haben sich heutzutage zwei Techniken etabliert. Einerseits ist dies das pulverbettbasierte Schmelzen, andererseits das Schmelzen von (einem vergleichsweise geringerem Volumen an) Pulver bzw. Granulat in einer speziell dafür ausgelegten Düse. In beiden Fällen wird üblicherweise ein Laser zum Aufschmelzen verwendet.

Diese Techniken weisen eine Reihe von Nachteilen auf. Beispielsweise ist der Einsatz von Lasern relativ teuer und verlangt bestimmte Sicherheitsmaßnahmen, insbesondere aufgrund der hohen Strahlungsdichte.

Der Aufbau des jeweiligen Werkstücks erfolgt stets von unten nach oben, wobei, insbesondere bei pulverbettbasierten Verfahren, ein relativ aufwendiges Reinigen des Werkstücks von Pulver/Granulat stattfinden muss und eine hohe Menge an Pulver-/Granulatabfall entsteht.

Schließlich ist auch die relativ lange Dauer der Herstellung eines Werkstücks zu nennen, was nicht zuletzt daran liegt, dass mittels der eingesetzten Laser nur relativ kleine räumliche Bereiche aufgeschmolzen werden können.

Aus der US 2016/279705 A1 ist eine Vorrichtung gemäß dem Oberbegriff des Anspruchs 1 bekannt.

Aus der EP 3437765 A1 ist ein Verfahren zur additiven Fertigung bekannt, wobei ein auf einem nach oben und unten bewegbaren Werkstückträger befestigtes Werkstück von oben an ein Metallpulver herangeführt wird. Das Metallpulver ist auf einer Art Fenster angeordnet, sodass das Pulver von unten durch das Fenster hindurch mit Strahlung bestrahlt werden kann, um das Pulver aufzuschmelzen. Als Strahlungsquelle kann dabei ein Laser oder digitaler Lichtprojektor dienen. Das Licht bzw. Lichtmuster schmilzt das Pulver flächig auf, sodass bei Erstarrung die nächste Lage des Werkstücks ausgebildet wird. Das Werkstück wird daraufhin wieder angehoben, um eine neue Lage Pulver auf das Fenster aufbringen zu können usw. Die Pulverschicht wird zwar lateral begrenzt, aber über ihre gesamte Dicke aufgeschmolzen, um die neue Lage auszubilden.

Die US 2019/126536 A1 offenbart eine Vorrichtung zur additiven Fertigung mit flüssigem Harz, das in eine Wanne gefüllt ist und mittels geeigneter Strahlung ausgehärtet wird. Der plattenförmige Boden der Wanne ist für solche Strahlung transparent und z.B. aus Glas gefertigt. Als Strahlungsquelle ist beispielsweise ein Projektor mit einer UV-Blitzlampe gezeigt mit einer optionalen Fokussieroptik. Weiters ist ein Ausführungsbeispiel offenbart, bei dem der Strahl auf eine bestimmte Größe fokussiert und zu einer bestimmten Position in einer Ebene, die mit der Oberfläche des Harzes zusammenfällt, gesteuert werden kann.

Die US 2013/015609 A1 offenbart eine Vorrichtung zur additiven Fertigung, wobei ein Pulver auf einem zumindest abschnittsweise transluzenten Tisch platziert wird und das Pulver abschnittsspezifisch aufgeschmolzen wird, indem Energie mittels eines Energiestrahls durch den Tisch hindurch ins Pulver eingebracht wird. Beim Abkühlen entsteht so auf einer ans Pulver angenäherten, rauf und runter bewegbaren Basis eine neue Lage. Dabei wird die Pulverschicht zwar lateral begrenzt bzw. sogar strukturiert, aber über ihre gesamte Dicke aufgeschmolzen, um die neue Lage auszubilden.

### AUFGABE DER ERFINDUNG

Es ist daher Aufgabe der vorliegenden Erfindung, eine Vorrichtung zur additiven Fertigung zur Verfügung zu stellen, mit der die oben genannten Nachteile überwunden werden. Insbesondere soll die erfindungsgemäße Vorrichtung eine raschere Herstellung von Werkstücken bei vergleichsweise niedrigen Kosten und einem ökonomischen Einsatz von Pulver/Pulvergemisch bzw. Granulat ermöglichen.

### DARSTELLUNG DER ERFINDUNG

Zur Lösung der genannten Aufgabe ist es bei einer Vorrichtung zur additiven Fertigung zumindest eines Werkstücks, die Vorrichtung umfassend zumindest eine Lichtquelle zur Abgabe von Licht in einem Betriebszustand der Vorrichtung, ein Trägerelement, das für das Licht der Lichtquelle durchlässig ist und im Betriebszustand im Wesentlichen waagrecht angeordnet ist, sodass auf einer Oberseite des Trägerelements ein aufschmelzbares Granulat anordenbar ist, wobei im Betriebszustand der Strahlengang des Lichts so ist, dass das Licht mit zumindest einer Richtungskomponente parallel zu einer ersten Richtung, die von einer der Oberseite gegenüberliegenden Unterseite des Trägerelements zur Oberseite weist, von der Unterseite auf das Trägerelement trifft, die Vorrichtung weiters umfassend eine Werkstückhalterung, die in der ersten Richtung gesehen hinter der Oberseite des Trägerelements angeordnet ist, wobei das Trägerelement und/oder die Werkstückhalterung mittels mindestens eines Verschiebemittels mit zumindest einer Richtungskomponente parallel und antiparallel zur ersten Richtung bewegbar ist/sind, die Vorrichtung weiters umfassend mindestens ein Fokussiermittel, das dazu eingerichtet ist, das Licht in der ersten Richtung gesehen hinter der Oberseite des Trägerelements zu fokussieren, um im Betriebszustand eine von der Oberseite des Trägerelements beabstandete Schicht des Granulats mit dem Licht aufschmelzen zu können, erfindungsgemäß vorgesehen, dass ein oder mehrere Abschlusselemente vorgesehen sind, die mit zumindest einer Richtungskomponente normal auf die erste Richtung bewegbar sind, um am Werkstück im Wesentlichen dicht anliegend angeordnet zu werden.

D.h. die Fertigung des Werkstücks funktioniert mit der erfindungsgemäßen Vorrichtung von oben nach unten, weil bei bestimmungsgemäßer Verwendung der Vorrichtung effektiv das Werkstück von oben an das Granulat bzw. Pulver oder Pulvergemisch - zumindest bis zur Kontaktierung des Granulats - herangeführt wird. Entsprechend kann aufgrund der Schwerkraft auch kein Granulat bzw. Pulver oder Pulvergemisch unbeabsichtigt an Stellen des bereits fertiggestellten Teils des Werkstücks liegen bleiben, sondern nur das aufgeschmolzene Granulat, das vom bereits fertiggestellten Teil des Werkstücks kontaktiert wird, bleibt an diesem haften bzw. verbindet sich mit diesem. Man könnte daher auch von einem Pulver-Layer-Verfahren - im Gegensatz zu einem pulverbettbasierten Verfahren - sprechen, das durch die erfindungsgemäße Vorrichtung ermöglicht wird. Ein extrem effizienter Umgang mit dem Granulat ist die Folge, d.h. Abfälle können drastisch reduziert werden, was Ressourcenverbrauch, Kosten und Gefährdung durch das Granulat bzw. Pulver oder Pulvergemisch senkt.

Weiters kann bei der Herstellungsweise von oben nach unten auch am Beginn der Fertigung des Werkstücks Material eingespart werden im Vergleich zu konventionellen, von unten nach oben arbeitenden Verfahren. Mit der erfindungsgemäßen Vorrichtung wird an der Werkstückhalterung zunächst eine Stützstruktur, ein sog. Support, durch Auftragen von ca. 40 Schichten bzw. Lagen mit typischerweise insgesamt ca. 2 mm Dicke hergestellt. Erst auf diesem Support wird das eigentliche Werkstück gefertigt, wobei der Support nach Fertigstellung eine einfache Trennung des Werkstücks von der Werkstückhalterung erlaubt. Da dieser Support vergleichsweise dünner ausfällt als bei bekannten, von unten nach oben arbeitenden Verfahren, wird auch hier Material eingespart.

Weiters trägt auch die Fokussierung des Lichts in der ersten Richtung gesehen hinter der Oberseite des Trägerelements zur Materialeinsparung bei. Diese Fokussierung bewirkt nämlich, dass das Aufschmelzen des Granulats vorwiegend in einer obersten, dem Werkstück bzw. der Werkstückhalterung zugewandten und nächstliegenden Schicht stattfindet. Diese von der Oberseite des Trägerelements beabstandete Schicht umfasst die als nächstes aufzubringende Lage bzw. wird die als nächstes aufzubringende Lage durch diese Schicht ausgebildet. Entsprechend wird das Anhaften des aufgeschmolzenen Granulats auf der Werkstückhalterung bzw. dem bereits hergestellten Teil des Werkstücks ermöglicht.

Es wird somit das Aufschmelzen von nicht benötigtem Granulat vermieden, womit Abfall vermieden wird und von vornherein vergleichsweise wenig Granulat auf der Oberseite des Trägerelements angeordnet werden muss, um die nächste Lage aufzutragen.

Entsprechend wird durch diese Fokussierung des Lichts auch ein Verkleben oder gar Verschweißen des Granulats mit dem Trägerelement vermieden, da eine unmittelbar auf der Oberseite aufliegende Schicht des Granulats nicht aufgeschmolzen wird. Dies ist ein wichtiger Punkt für die problemlose Fertigung jeder Lage, der ggf. durch Kühlung und/oder Vibration und/oder Adhäsion verhindernde Beschichtungen zusätzlich unterstützt werden kann.

Nachdem eine Lage bzw. Schicht aufgetragen worden ist, wird das Werkstück mit der Werkstückhalterung bzw. dem mindestens einen Verschiebemittel typischerweise etwas abgehoben, um ggf. neues Granulat für die Aufbringung der nächsten Lage am Trägerelement bzw. auf dessen Oberseite anordnen zu können. Sodann beginnt das Auftragen der nächsten Lage analog zum Auftragen der vorherigen Lage, wobei das Werkstück wieder an das Granulat - zumindest bis zur Kontaktierung des Granulats - herangeführt wird und eine im Bereich des Werkstücks liegende Schicht des Granulats aufgeschmolzen wird.

Ggf. kann beim Auftragen einer Lage das Werkstück auch etwas in das Granulat hineingedrückt werden (d.h. das Werkstück wird für den Auftrag der nächsten Lage nicht bloß bis zur Kontaktierung des Granulats an dieses angenähert, sondern drückt gegen bzw. in das Granulat). Wie oben erwähnt, kann dies ggf. unter Einwirkung von z.B. Vibrationen geschehen.

"Zur Fertigung zumindest eines Werkstücks" ist so zu verstehen, dass grundsätzlich auch mehrere Werkstücke gleichzeitig mit der Werkstückhalterung gehalten werden können bzw. können auch mehrere Werkstücke gleichzeitig gefertigt werden. Andererseits kann ein Werkstück auch aus mehreren separaten Teilen bestehen, die gleichzeitig hergestellt werden.

Vorzugsweise ist die Lichtquelle zur Abgabe von sichtbarem Licht ausgelegt. Das Licht der Lichtquelle kann aber prinzipiell auch im nicht sichtbaren Bereich liegen, z.B. im Infrarotbereich oder UV-Bereich.

Das Trägerelement ist für das Licht der Lichtquelle durchlässig. Entsprechend sind das Material des Trägerelements und das Licht vorzugsweise aufeinander abgestimmt. Eine mathematisch hundertprozentige Transparenz ist dabei in der Praxis weder notwendig noch erreichbar. D.h. eine geringfügige Absorption ist in der Praxis weder vermeidbar noch störend.

Weiters wäre es auch denkbar, dass das Trägerelement in gewissen Bereichen, insbesondere Randbereichen, wo kein Granulat deponiert wird oder jedenfalls kein Aufschmelzen erfolgen soll, nicht lichtdurchlässig ist. D.h. "lichtdurchlässig" ist so zu verstehen, dass zumindest in einem Abschnitt, der für das Aufschmelzen vorgesehen ist, das Licht durch das Trägerelement gelangen kann, um das Granulat aufzuheizen.

Das Trägerelement kann eine Platte sein. Es sind aber auch andere Ausgestaltungen des Trägerelements möglich. Beispielsweise kann das Trägerelement auch durch eine Folie oder eine Endlosbahn ausgebildet sein.

Zur waagrechten Orientierung des Trägerelements, insbesondere der Oberseite des Trägerelements, im Betriebszustand der Vorrichtung ist anzumerken, dass diese Orientierung während der bestimmungsgemäßen Verwendung der Vorrichtung gegeben ist, um eine zuverlässige Anordnung des Granulats auf der Oberseite des Trägerelements zu ermöglichen. Wenn die Trägerplatte nicht im Wesentlichen waagrecht wäre, würde das Granulat aufgrund der Schwerkraft abgleiten/abrollen/abfließen. D.h. "im Wesentlichen waagrecht" ist so zu verstehen, dass dieses Abgleiten/Rollen/Fließen des Granulats nicht stattfindet. Je nach Granulat kann die Orientierung somit auch deutlich von einer mathematisch perfekt parallelen Anordnung zur Horizontalen abweichen. Wenn die Vorrichtung nicht im Betriebszustand ist und z.B. transportiert wird, sind natürlich Orientierungen der Vorrichtung möglich, bei denen die Trägerplatte nicht waagrecht angeordnet ist.

Die erste Richtung muss nicht zwangsläufig normal auf die Ober- bzw. Unterseite stehen, sondern kann auch schräg zu diesen Seiten sein.

Die erste Richtung könnte man auch als "Beleuchtungsrichtung" auffassen. Im Hinblick auf durch die Fokussierung unter unterschiedlichen Richtungen auf das Trägerelement treffenden Lichtstrahlen kann festgehalten werden, dass alle diese Richtungen eine Komponente parallel zur ersten Richtung aufweisen, wobei hier "parallel" nicht als entgegengesetzt zu verstehen ist (letzteres wäre "antiparallel").

Die erste Richtung hängt nur von der Ober- und Unterseite ab, ist also unabhängig vom Betriebszustand der Vorrichtung.

Die Anordnung der Werkstückhalterung hinter der Oberseite (in der ersten Richtung gesehen) kann auch als "über der Oberseite" bezeichnet werden.

Mit dem mindestens einen Verschiebemittel kann ein Abstand zwischen der Oberseite des Trägerelements und der Werkstückhalterung verringert oder vergrößert werden, wodurch das (herzustellende) Werkstück an die Oberseite und damit an das Granulat angenähert oder entfernt werden kann. Geeignete Verschiebemittel sind an sich bekannt und können beispielsweise Linearantriebe, elektrische oder hydraulische Zylinder, Servomotoren, Steppermotoren etc. umfassen.

Vorzugsweise wird mittels des mindestens einen Verschiebemittels nur die Werkstückhalterung bewegt. Da es aber nur auf die Relativbewegung zum Trägerelement ankommt, wäre es denkbar, dass auch nur das Trägerelement bewegt wird oder dass das Trägerelement und die Werkstückhalterung bewegt werden.

Dass das Licht überhaupt durch das Granulat bzw. bis in die aufzuschmelzende Schicht gelangt, wird durch die Granulatform des Materials begünstigt, da das Granulat weniger dicht als ein Vollmaterial ist. Beispielsweise kann Licht durch ein Metallgranulat mit einer Dicke über der Oberseite des Trägerelements von typischerweise rund 20 µm bis 100 µm bis zur obersten, aufzuschmelzenden Schicht dringen, wohingegen ein Metallblock bzw. eine Metallfolie aus Vollmaterial mit einer solchen Dicke für das Licht undurchdringlich bzw. opak sein kann.

Das mindestens eine Fokussiermittel kann theoretisch auch in die Lichtquelle integriert sein.

Die Fokussierung des Lichts ist, wie oben bereits erläutert, so, dass die Brennebene hinter der Oberseite des Trägerelements liegt. Die Brennebene kann dabei grundsätzlich auch hinter dem Granulat und damit auch hinter der aufzuschmelzenden Schicht liegen, da die Fokussierung auch in diesem Fall so ist, dass das Aufschmelzen des Granulats vorwiegend in der obersten, dem Werkstück bzw. der Werkstückhalterung zugewandten und nächstliegenden Schicht stattfindet. Dass die Brennebene nicht in der aufzuschmelzenden Schicht liegt, kann darüberhinaus dazu ausgenützt werden, gezielt größere laterale Bereiche dieser Schicht zu beleuchten und aufzuschmelzen. Gegenüber konventioneller Erhitzung mittels Laser lassen sich so wesentlich größere Flächen auf einmal aufschmelzen, was den Herstellungsprozess des Werkstücks dramatisch beschleunigt. Entsprechend kann die Produktivität bei der Fertigung mit der erfindungsgemäßen Vorrichtung im Vergleich zu bekannten Vorrichtungen typischerweise um mindestens eine Größenordnung erhöht werden.

Bei einer bevorzugten Ausführungsform der erfindungsgemäßen Vorrichtung ist vorgesehen, dass das mindestens eine Fokussiermittel dazu eingerichtet ist, den Fokus des Lichts variabel einzustellen. Hierdurch ist es möglich, die laterale Ausdehnung des aufzuschmelzenden Bereichs in der aufzuschmelzenden Schicht gezielt einzustellen. Typischerweise ist die Variation dieser lateralen Ausdehnung bzw. des "Durchmessers" (der laterale Bereich kann, muss aber nicht exakt kreisförmig sein) in einem Bereich von 1 mm bis 50 mm. Hierdurch lassen sich grobe Strukturen des zu fertigenden Werkstücks, insbesondere Wandstärken, bereits genau definieren - ohne zusätzliche Hilfsmittel.

Um die genannte Einstellbarkeit des Fokus auf konstruktiv besonders einfache Art und Weise zu verwirklichen, ist es bei einer besonders bevorzugten Ausführungsform der erfindungsgemäßen Vorrichtung vorgesehen, dass das mindestens eine Fokussiermittel mindestens eine Fokussierlinse umfasst, die zwischen der Lichtquelle und dem Trägerelement angeordnet ist, wobei die Fokussierlinse mit zumindest einer Richtungskomponente parallel und antiparallel zur ersten Richtung verschiebbar ist. D.h. die mindestens eine Fokussierlinse kann hier ebenso wie die Lichtquelle unterhalb des Trägerelements bzw. in erster Richtung gesehen vor dem Trägerelement angeordnet sein.

Bei einer bevorzugten Ausführungsform der erfindungsgemäßen Vorrichtung ist vorgesehen, dass die mindestens eine Lichtquelle durch eine LED oder mehrere LEDs ausgebildet ist. Geeignete LEDs existieren für Licht im sichtbaren Bereich sowie für Licht im nicht sichtbaren Bereich, insbesondere im UV- oder Infrarot-Bereich. Im sichtbaren Bereich sind beispielsweise aus der Beleuchtungstechnik LED-Matrix-Quellen mit 600 W oder 1000 W bekannt, die sich bei der erfindungsgemäßen Vorrichtung einsetzen lassen. Dabei zeigen Praxistests, dass bereits mit der 600 W-Quelle Temperaturen von 900°C erreicht werden, womit das Schmelzen von Metallpulvern problemlos möglich ist.

Bei mehreren Lichtquellen, insbesondere bei mehreren LEDs, kann die gezielte Ansteuerung einzelner Lichtquellen (bzw. LEDs) außer zum Schmelzen des Granulats bzw. Pulver- oder Pulvergemisches auch zur Wärmebehandlung nach dem Schmelzvorgang und/oder zum Vorwärmen der aufzuschmelzenden Granulatschicht verwendet werden. Dies ist unter dem Gesichtspunkt als vorteilhaft anzusehen, dass extrem hohe Abkühlraten, wie sie bei Verwendung von konventionellen Laser-Systemen auftreten, zu ungewünschten Werkstoffeigenschaften, wie z.B. Aufhärtung, führen können. Zur gezielten Ansteuerung der einzelnen Lichtquellen (bzw. LEDs) können beispielsweise Methoden der künstlichen Intelligenz oder Ergebnisse aus Werkstoff-Simulationen herangezogen werden, um gewünschte Werkstoffeigenschaften im Werkstück zu erreichen.

Die Lichtquelle bzw. die Lichtwellenlänge des Lichts kann natürlich auf das jeweilige aufzuschmelzende Granulat (insbesondere auf dessen Absorptionsspektrum) - z.B. aus Metall, aus Kunststoff oder Mischungen aus Kunststoff und Metall - abgestimmt sein. Entsprechend dem oben Gesagten ist es bei einer bevorzugten Ausführungsform der erfindungsgemäßen Vorrichtung vorgesehen, dass die mindestens eine Lichtquelle zur Abgabe von sichtbarem Licht ausgebildet ist.

Bei einer bevorzugten Ausführungsform der erfindungsgemäßen Vorrichtung ist vorgesehen, dass die mindestens eine Lichtquelle bewegbar ist, insbesondere in einer auf die erste Richtung normal stehenden Ebene und/oder parallel und antiparallel zur ersten Richtung. Durch die Bewegung bzw. Positionierung der Lichtquelle in besagter Ebene kann der lateralen Struktur, z.B. einem Wandverlauf, des herzustellenden Werkstücks Rechnung getragen werden, indem aus der aufzuschmelzenden Schicht des Granulats entsprechende laterale Bereiche aufgeschmolzen werden, die auf den bereits fertiggestellten Teil des Werkstücks im nächsten Schritt aufgebracht werden.

Selbstverständlich kommt es dabei nur auf die Relativbewegung zwischen Trägerplatte mit dem Granulat und dem Fokus der Lichtquelle an. Entsprechend sind auch Ausführungen mit fixer Optik und lateral beweglicher Trägerplatte denkbar und bei sehr kleinen Arbeitsräumen technisch mitunter sinnvoll.

Ein komplexes aktives Spiegelsystem, wie es bei konventionellen Lösungen mit Laser notwendig ist, kann jedenfalls entfallen.

Darüberhinaus kann auch eine Verstellung in der ersten Richtung vorgesehen sein, wodurch ggf. der Fokus, insbesondere besonders fein, eingestellt werden kann, wenn die mindestens eine Fokussierlinse zwischen der Lichtquelle und dem Trägerelement angeordnet ist. D.h. die Lichtquelle kann in diesem Fall alternativ oder zusätzlich zur mindestens einen Fokussierlinse parallel und antiparallel zur ersten Richtung verfahren werden, um den Fokus zu justieren.

Bei einer besonders bevorzugten Ausführungsform der erfindungsgemäßen Vorrichtung ist vorgesehen, dass die mindestens eine Lichtquelle gemeinsam mit dem mindestens einen Fokussiermittel bewegbar ist. Hierdurch kann insbesondere bei "lateralen" Bewegungen der Lichtquelle sichergestellt werden, dass der tatsächliche Fokus auch stets dem gewünschten Fokus entspricht, beispielsweise wenn ein Wandverlauf des Werkstücks mit gleichbleibender Wandstärke hergestellt werden soll.

Darüberhinaus lassen sich in diesem Fall konstruktiv besonders günstige Ausführungsformen realisieren, beispielsweise wenn die Lichtquelle und das Fokussiermittel gemeinsam auf einer einzigen Plattform (statt auf mehreren Plattformen) montiert sind, mit welcher Plattform Bewegungen in der auf die erste Richtung normal stehenden Ebene bewirkt werden.

Wie bereits erwähnt, kann das Trägerelement unterschiedlich ausgebildet werden. Bei einer bevorzugten Ausführungsform der erfindungsgemäßen Vorrichtung ist vorgesehen, dass das Trägerelement als Platte, vorzugsweise aus einem Glas oder einer Glaskeramik, ausgebildet ist. Die Plattengeometrie ist einerseits besonders einfach herzustellen, andererseits kann das Granulat bequem auf der Platte angeordnet werden.

Solche Platten lassen sich mit Gläsern oder Glaskeramiken leicht und kostengünstig herstellen. Gläser, z.B. Quarzglas, sowie Glaskeramiken eigenen sich für den Einsatz von einem breiten Spektrum an Licht, in und außerhalb des sichtbaren Bereichs. Insbesondere kann eine hohe Durchlässigkeit für Wärmestrahlung gewährleistet werden. Auch Saphirglas wäre beispielsweise als Material für das Trägerelement möglich.

Bei einer bevorzugten Ausführungsform der erfindungsgemäßen Vorrichtung ist vorgesehen, dass eine Kühlung für das Trägerelement vorgesehen ist. Hierdurch kann ein Ankleben oder Anschmelzen des Granulats am Trägerelement besonders wirkungsvoll vermieden werden. Insbesondere kann besonders gut sichergestellt werden, dass das Aufschmelzen nur in einer von der Oberseite des Trägerelements beabstandeten Schicht des Granulats erfolgt.

Geeignete Kühlungsmöglichkeiten sind an sich bekannt. Beispielsweise kann der Rand des Trägerelements flüssiggekühlt oder mittels mindestens eines Peltier-Elements gekühlt sein. Weiters wäre auch eine Kühlung mit kühlem Gas denkbar, das nur auf die Unterseite des Trägerelements geblasen wird, um die Anordnung des Granulats auf der Oberseite nicht zu beeinträchtigen.

Allgemein sei erwähnt, dass bei hohen Temperaturen, wie sie für das Aufschmelzen von Metallpulver notwendig sind, die Herstellung nicht unter Luft, sondern unter Schutzgas, z.B. unter Argon, erfolgt - wie dies auch bei den konventionellen, aus dem Stand der Technik bekannten Vorrichtungen und Verfahren üblich ist. Da, wie bereits erläutert, bei der erfindungsgemäßen Vorrichtung vergleichsweise weniger Granulat zur Fertigung eingesetzt werden muss, kann auch vergleichsweise weniger - typischerweise um bis zu eine Größenordnung weniger - Schutzgas als bei konventionellen Methoden, insbesondere als bei konventionellen Pulverbett-Methoden, verwendet werden, was wiederum Ressourcen und Kosten schont.

Entsprechend ist es bei einer bevorzugten Ausführungsform der erfindungsgemäßen Vorrichtung vorgesehen, dass eine Schutzgaszuführung vorgesehen ist, mit der Schutzgas der Oberseite des Trägerelements zuführbar ist. Entsprechend kann, wenn sich Granulat auf der Oberseite des Trägerelements befindet, auch diesem Granulat das Schutzgas zugeführt werden.

Generell können durch das Schutzgas chemische Reaktionen bei der additiven Fertigung unterbunden werden, insbesondere Oxidbildung bei metallischen Granulaten.

Die Schutzgaszuführung kann ein oder mehrere Düsenelemente umfassen.

Das Schutzgas kann als langsamer Gasstrom, der über die Oberseite des Trägerelements bzw. ggf. über das auf der Oberseite angeordnete Granulat streicht, zugeführt werden. Es ist aber auch denkbar, das Schutzgas gewissermaßen statisch im Bereich zwischen der Oberseite des Trägerelements und der Werkstückhalterung durch die Schutzgaszuführung zur Verfügung zu stellen. Letzteres bietet sich insbesondere bei Vorhandensein von einem oder mehreren Abschlusselementen an, die diesen Bereich nach oben hin dicht abschließen können, indem sie dicht am Werkstück anliegen.

Bei einer bevorzugten Ausführungsform der erfindungsgemäßen Vorrichtung ist vorgesehen, dass mindestens ein elektrostatisches Positioniermittel vorgesehen ist, um das Granulat elektrostatisch auf dem Trägerelement einstellbar zu positionieren. Hierdurch kann das Granulat gezielt so auf der Oberseite des Trägerelements angeordnet werden, dass die laterale Struktur der nächsten auf das Werkstück aufzubringenden Lage wiedergegeben wird. Entsprechend kann die Menge an Granulat, das für die Herstellung der nächsten Lage des Werkstücks auf der Oberseite des Trägerelements angeordnet werden muss, weiter verringert werden, was Material und Kosten spart.

Weiters ist die Ausbildung sehr feiner Strukturen durch das mindestens eine Positioniermittel möglich. Diese feinen Bereiche bzw. Strukturen können deutlich geringere laterale Abmessungen aufweisen als Bereiche bzw. Strukturen, die ohne Positioniermittel nur durch Variation des Fokus' des Lichts herstellbar sind.

Das Aufschmelzen kann sodann besonders einfach durchgeführt werden, indem der Fokus so groß gewählt wird, dass einfach das gesamte positionierte Granulat beleuchtet wird.

Elektrostatische Positioniermittel für Granulat bzw. Pulver/Pulvergemisch sind an sich bekannt. Beispielsweise wird bei einem Laserdrucker Toner elektrostatisch einerseits auf die Bildtrommel, andererseits aufs Papier aufgebracht. Bei der erfindungsgemäßen Vorrichtung kann die Positionierung des Granulats analog beispielsweise mit einem Aufladestab oder mehreren Aufladestäben vorgenommen werden.

Bei einer besonders bevorzugten Ausführungsform der erfindungsgemäßen Vorrichtung ist vorgesehen, dass das Trägerelement zwischen dem mindestens einen elektrostatischen Positioniermittel und der Werkstückhalterung angeordnet ist. D.h. das mindestens eine elektrostatische Positioniermittel befindet sich unterhalb des Trägerelements bzw. auf der Seite der Unterseite des Trägerelements. Hierdurch ist eine beliebige Positionierung des Positioniermittels bequem möglich, und gleichzeitig kann das Granulat ungestört der Oberseite des Trägerelements zugeführt werden bzw. wird auch die Anordnung der Werkstückhalterung durch das mindestens eine elektrostatische Positioniermittel nicht beeinflusst.

Die elektrostatische Wirkung durch das Trägerelement hindurch ist dabei problemlos möglich bzw. praktisch nicht beeinträchtigt.

Bei einer besonders bevorzugten Ausführungsform der erfindungsgemäßen Vorrichtung ist vorgesehen, dass das mindestens eine elektrostatische Positioniermittel bewegbar ist, insbesondere in einer auf die erste Richtung normal stehenden Ebene und/oder parallel und antiparallel zur ersten Richtung. Insbesondere durch die Bewegung bzw. Positionierung des mindestens einen elektrostatischen Positioniermittels in besagter Ebene kann das Granulat extrem rasch, und insbesondere auch automatisiert, gezielt an den gewünschten Stellen auf der Oberseite des Trägerelements angeordnet werden, um die nächste strukturiere Lage auf das Werkstück aufzubringen. Eine weitere Produktivitätssteigerung ist die Folge.

Die Bewegung des mindestens einen Positioniermittels parallel zur ersten Richtung kann dazu verwendet werden, das jeweilige Positioniermittel nach seiner lateralen Bewegung in besagter Ebene noch besonders nah an die Unterseite des Trägerelements heranzuführen, um die elektrostatische Wirkung zu maximieren. Für die Bewegung in besagter Ebene kann das jeweilige Positioniermittel entsprechend zunächst antiparallel zur ersten Richtung etwas von der Unterseite entfernt werden, um eine Beschädigung des Trägerelements durch die laterale Bewegung komplett ausschließen zu können.

Weiters ist es auch denkbar, das jeweilige Positioniermittel durch Verschiebung antiparallel zur ersten Richtung deutlich von der Unterseite des Trägerelements zu beabstanden, wenn das jeweilige Positioniermittel gerade nicht gebraucht wird und eine unerwünschte elektrostatische Aufladung jedenfalls vermieden werden soll.

Bei einer bevorzugten Ausführungsform der erfindungsgemäßen Vorrichtung ist vorgesehen, dass eine Vorwärmeinheit vorgesehen ist, um das Werkstück, insbesondere in einem dem Trägerelement zugewandten Endbereich des Werkstücks, zu erwärmen. Mittels der Vorwärmeinheit kann das Werkstück, insbesondere im Endbereich, auf eine Temperatur knapp unterhalb der Schmelztemperatur des Materials bzw. Granulats aufgewärmt werden.

Wenn kein Aufheizen der aufzuschmelzenden Schicht des Granulats mit dem Licht der Lichtquelle stattfinden würde, würde diese Schicht durch das vorgewärmte Werkstück ebenfalls auf eine Temperatur knapp unter der Schmelztemperatur des Granulats erwärmt werden (maximal bis zur Temperatur des vorgewärmten Werkstücks; i.A. auf eine etwas geringere Temperatur als jene des vorgewärmten Werkstücks), wenn das vorgewärmte Werkstück an das Granulat zumindest bis zu dessen Kontaktierung herangeführt ist und so Wärme auf das Granulat überträgt. Entsprechend ist der Temperaturunterschied, der durch das weitere Aufheizen mittels des Lichts noch überwunden werden muss, relativ klein, was das Aufschmelzen bzw. die Fertigung begünstigt.

Weiters wird durch die Vorwärmung des Werkstücks ein optimales Anhaften bzw. Verbinden der aufgeschmolzenen Schicht am Werkstück bzw. an dessen Endbereich begünstigt. Beispielsweise kann das Werkstück in einem dem Trägerelement zugewandten Endbereich mittels der Vorwärmeinheit auf eine Temperatur im Bereich von 500°C bis 600°C aufgewärmt werden, wobei die Schmelztemperatur des Granulats im Bereich von 620°C bis 650°C liegt.

Allgemein sei jedoch betont, dass mit der erfindungsgemäßen Vorrichtung weit höhere (und natürlich auch niedrigere) Temperaturen erzielbar sind. Insbesondere kann auch Granulat aus Stahlwerkstoffen aufgeschmolzen werden, also bei Temperaturen im Bereich von typischerweise ca. 1400°C bzw. bis ca. 1550°C.

Geeignete Mittel zum Vorwärmen sind an sich bekannt. Beispielsweise wäre es denkbar, dass zum Vorwärmen lediglich Elemente - z.B. elektrische Heizwiderstände oder elektrische Heizdrähte oder durch chemische Prozesse erhitzte Heizelemente - verwendet werden, die Wärmestrahlung in Richtung des Werkstücks abgeben, ohne das Werkstück zu kontaktieren. Es wäre aber auch denkbar, dass ein solches Element das Werkstück zumindest abschnittsweise kontaktiert, um Wärme alternativ oder zusätzlich zur Wärmestrahlung auch durch Wärmeleitung auf das Werkstück zu übertragen.

Bei einer besonders bevorzugten Ausführungsform der erfindungsgemäßen Vorrichtung ist vorgesehen, dass die Vorwärmeinheit relativ zur Werkstückhalterung bewegbar ist, insbesondere in einer auf die erste Richtung normal stehenden Ebene und/oder parallel und antiparallel zur ersten Richtung. Hierdurch kann die Vorwärmeinheit optimal relativ zur Werkstückhalterung und damit zum Werkstück positioniert werden, um das Werkstück bzw. einen gewünschten Bereich, insbesondere den dem Trägerelement zugewandten Endbereich des Werkstücks, vorzuwärmen. Die Positionierung der Vorwärmeinheit kann dabei entsprechend an die geometrische Form des Werkstücks angepasst sein, vorzugsweise in allen Raumrichtungen. Beispielsweise ist es auch denkbar, dass die Vorwärmeinheit bei einem hohlen und offenen Werkstück zumindest abschnittsweise innerhalb des Werkstücks angeordnet wird, um das Werkstück von innen nach außen zu erwärmen.

Auch eine automatisierte Bewegung bzw. Positionierung der Vorwärmeinheit ist möglich.

Wenn die Vorwärmeinheit relativ zur Werkstückhalterung nicht bewegt wird, kann ggf. natürlich trotzdem eine Bewegung der Vorwärmeinheit stattfinden, nämlich dann, wenn die Werkstückhalterung bewegt wird.

Wie gesagt, ist bei der erfindungsgemäßen Vorrichtung vorgesehen, dass ein oder mehrere Abschlusselemente vorgesehen sind, die mit zumindest einer Richtungskomponente normal auf die erste Richtung bewegbar sind, um am Werkstück im Wesentlichen dicht anliegend angeordnet zu werden. D.h. das oder die Abschlusselemente können lateral an das Werkstück bzw. an den bereits fertiggestellten Teil des Werkstücks herangeführt werden und mit diesem im Wesentlichen dicht abschließen. Dies ermöglicht es, den (bereits fertiggestellten) Teil des Werkstücks der auf der vom Trägerelement abgewandten Seite der Abschlusselemente liegt, weiter zu bearbeiten, noch während die additive Fertigung des restlichen Werkstücks läuft und ohne dass die additive Fertigung des restlichen Werkstücks von der Weiterbearbeitung beeinträchtigt wird. Die Weiterbearbeitung kann dabei beispielsweise umfassen: Fräsen, Bohren, Gewinden, Schleifen, Beschichten (z.B. Lackieren) etc.

Es wäre auch vorstellbar, dass die Abschlusselemente eine gute Wärmeleitung aufweisen und dass die Abschlusselemente entsprechend zum oben genannten Vorwärmen verwendet werden oder dazu verwendet werden, um zum genannten Vorwärmen zusätzlich etwas beizutragen.

Die genannte Weiterbearbeitung kann natürlich auch das Prüfen und Sichern von Qualitätsanforderungen umfassen.

"Im Wesentlichen dicht" ist dabei so zu verstehen, dass Gase oder Partikel, die bei den Weiterbearbeitungsschritten entstehen und sich negativ auf die additive Fertigung des restlichen Werkstücks auswirken würden, nicht zwischen den Abschlusselementen und dem Werkstück in Richtung Trägerelement zu diesem bzw. zum am Trägerelement angeordneten Granulat gelangen. Umgekehrt gewährleistet die Dichtheit auch, dass z.B. kein Granulat, das räumlich auf der dem Trägerelement zugewandten Seite der Abschlusselemente angeordnet ist, zwischen dem Werkstück und den dicht anliegenden Abschlusselementen auf die vom Trägerelement abgewandte Seite der Abschlusselemente gelangen kann. Entsprechend kann z.B. Granulat, das nach Aufbringung einer Schicht bzw. Lage noch überschüssig auf der Oberseite des Trägerelements liegt, problemlos abgesaugt werden, ohne dass dies zu einer Beeinträchtigung der Weiterbearbeitung des bereits fertiggestellten Teils des Werkstücks auf der anderen Seite der Abschlusselemente führen würde.

Das mindestens eine Abschlusselement kann z.B. als Kissen und/oder Membran, insbesondere als Hydromembran, ausgeführt sein. Einerseits kann hierdurch problemlos die gewünschte Dichtheit erzielt werden. Andererseits kann das mindestens eine Abschlusselement an Werkstücke unterschiedlichster Geometrien angepasst werden bzw. passt sich an diese an, sodass für diese Werkstücke nicht notwendigerweise jeweils mindestens ein speziell angefertigtes Abschlusselement zur Verfügung gestellt werden muss.

Bei einer besonders bevorzugten Ausführungsform der erfindungsgemäßen Vorrichtung ist vorgesehen, dass das Abschlusselement oder die Abschlusselemente in die Werkstückhalterung integriert sind. Dies erlaubt eine konstruktiv einfache Lösung, bei der das Abschlusselement oder die Abschlusselemente stets optimal relativ zur Werkstückhalterung positioniert sind, insbesondere indem sie bei einer Bewegung der Werkstückhalterung mit dieser mitbewegt werden.

Weiters sind auch Ausführungsvarianten denkbar, bei denen die Befestigung des Werkstücks auf der Werkstückhalterung direkt durch das Abschlusselement oder die Abschlusselemente erfolgt, indem das mindestens eine Abschlusselement nicht nur dicht am Werkstück anliegt, sondern das Werkstück z.B. festklemmt.

Entsprechend dem oben Gesagten ist es bei einer besonders bevorzugten Ausführungsform der erfindungsgemäßen Vorrichtung vorgesehen, dass mindestens ein Weiterbearbeitungsmittel zur Weiterbearbeitung eines bereits gefertigten Abschnitts des Werkstücks vorgesehen ist, wobei das mindestens eine Weiterbearbeitungsmittel in der ersten Richtung gesehen hinter dem Abschlusselement oder den Abschlusselementen angeordnet ist. D.h. das mindestens eine Weiterbearbeitungsmittel kann beispielsweise durch eine Fräsvorrichtung und/oder eine Bohrvorrichtung und/oder eine Gewindeschneidvorrichtung und/oder eine Schleifvorrichtung und/oder eine Lackier- bzw. Beschichtungsvorrichtung etc. ausgebildet sein.

Bei einer bevorzugten Ausführungsform der erfindungsgemäßen Vorrichtung ist vorgesehen, dass mindestens eine, vorzugsweise gekühlte, Maskeneinheit vorgesehen ist, die in der ersten Richtung gesehen so vor der Unterseite des Trägerelements angeordnet ist, dass im Betriebszustand die Maskeneinheit im Strahlengang des Lichts angeordnet ist, um die Beleuchtung lediglich eines oder mehrerer bestimmter Abschnitte des Granulats auf der Oberseite des Trägerelements zu ermöglichen. Entsprechend werden klarerweise auch nur bestimmte, durch die Maskeneinheit bzw. durch eine Maske der Maskeneinheit definierte Abschnitte der Unterseite sowie der Oberseite des Trägerelements beleuchtet. Da diese Abschnitte gleichzeitig beleuchtet werden können, kann eine weitere Produktivitätssteigerung erzielt werden.

Hierdurch können gezielt sehr feine laterale Bereiche der aufzuschmelzenden Schicht aufgeschmolzen werden bzw. können so sehr feine Strukturen des Werkstücks schichtweise hergestellt werden. Diese feinen Bereiche bzw. Strukturen können deutlich geringere laterale Abmessungen aufweisen als Bereiche bzw. Strukturen, die ohne Maske nur durch Variation des Fokus' des Lichts herstellbar sind.

Vorzugsweise arbeitet die Maskeneinheit bzw. Maske so, dass das Licht nur in bestimmten Bereichen, die für das Aufschmelzen der nächsten aufzutragenden Schicht bzw. Lage vorgesehen sind, von der Maske durchgelassen wird und ansonsten von der Maske absorbiert wird - es wäre aber z.B. auch eine Reflexion statt der Absorption prinzipiell denkbar. Entsprechend kann eine Kühlung der Maskeneinheit und damit der Maske vorgesehen sein, um jedenfalls auszuschließen, dass die Maskeneinheit bzw. die Maske durch das Licht über eine zulässige Grenztemperatur aufgeheizt und hierdurch beschädigt wird. Geeignete Kühlmöglichkeiten sind an sich bekannt, beispielsweise eine Gebläsekühlung oder eine Flüssigkeitskühlung oder eine Kühlung durch Peltier-Elemente, insbesondere in Randbereichen der Maskeneinheit bzw. der Maske.

Im einfachsten Fall ist die Maskeneinheit bzw. die Maske unveränderlich und bewirkt stets die gleiche Beleuchtung des Trägerelements, wenn sie sich im Strahlengang befindet.

Es sind aber auch Maskeneinheiten mit auswechselbaren Masken denkbar, wobei die Masken manuell oder maschinell bzw. automatisiert auswechselbar sein können.

Weiters wäre es auch denkbar, dass, ähnlich zu Filmrollen, ganze Maskenbänder vorgesehen sind, die durch die Maskeneinheit gezogen werden können, um je nach Position des Maskenbands in der Maskeneinheit unterschiedliche Masken zur Verfügung zu stellen und so unterschiedlich (lateral) strukturierte Schichten bzw. Lagen geschmolzenen Granulats auf das Werkstück auftragen zu können.

Die Maske bzw. Masken können aus unterschiedlichen Materialien gefertigt sein, die wiederum auf das Licht abgestimmt sein können. Beispielsweise können die Masken aus einem geeigneten Kunststoff, aus Metall oder aus einem Faserwerkstoff, insbesondere auf Basis von Kohlenstofffasern, hergestellt sein.

Bei einer besonders bevorzugten Ausführungsform der erfindungsgemäßen Vorrichtung ist vorgesehen, dass die mindestens eine Maskeneinheit eine durch eine Flüssigkristallanzeige ausgebildete Maske umfasst. Geeignete Flüssigkristallanzeigen sind an sich bekannt. Die so ausgebildeten Masken weisen den Vorteil auf, dass die Maske leicht, bevorzugt automatisiert, besonders bevorzugt dynamisch, geändert werden kann, um ungewünschte Bereiche im Strahlengang abzudunkeln und so nur gewünschte (laterale) Bereiche der aufzuschmelzenden Schicht des Granulats zu beleuchten. Entsprechend kann eine Steuereinheit zur Ansteuerung der Flüssigkristallanzeige vorgesehen sein.

Klarerweise kann die konkret eingesetzte Flüssigkristallanzeige auf das Licht, insbesondere im Hinblick auf dessen Lichtwellenlänge und/oder Polarisation, in an sich bekannter Weise abgestimmt sein. Entsprechend können auch ein oder mehrere, ggf. gekühlte, Polarisationsfilter für das Licht vorgesehen sein, die der Flüssigkristallanzeige vor- und/oder nachgeschaltet sind, um die Durchlässigkeit der Flüssigkristallanzeige für das Licht entsprechend einzustellen.

Entsprechend dem oben Gesagten ist erfindungsgemäß auch ein System vorgesehen, das System umfassend eine erfindungsgemäße Vorrichtung sowie das Granulat, das vorzugsweise Metallpulver umfasst.

Insgesamt ergibt sich eine mögliche Produktivitätssteigerung bei der Fertigung mit der erfindungsgemäßen Vorrichtung bzw. dem erfindungsgemäßen System in den oben beschriebenen Ausführungsvarianten von typischerweise bis zu zwei Größenordnungen im Vergleich zu bekannten Vorrichtungen bzw. Systemen.

Dabei können die Vorteile, die sich aus der, insbesondere variablen, Fokussierung des Lichts, und/oder aus der elektrostatischen Positionierung des Granulats und/oder aus der Verwendung einer, insbesondere als Flüssigkristallanzeige ausgeführten, Maske ergeben, synergistisch zusammenwirken. Neben der erhöhten Produktivität wird so außerdem erreicht, dass hohe Temperaturgradienten innerhalb einer Lage vermieden werden können, wodurch wiederum interne Spannungen und Schrumpfungen minimiert werden und die Qualität steigt.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Schnittansicht einer ersten Ausführungsform einer erfindungsgemäßen Vorrichtung bzw. eines erfindungsgemäßen Systems
- Fig. 2: eine schematische Schnittansicht einer zweiten Ausführungsform der erfindungsgemäßen Vorrichtung bzw. des erfindungsgemäßen Systems
- Fig. 3: eine schematische Schnittansicht einer dritten Ausführungsform der erfindungsgemäßen Vorrichtung bzw. des erfindungsgemäßen Systems
- Fig. 4: eine Detailansicht zur Ausführungsform der Fig. 3

### WEGE ZUR AUSFÜHRUNG DER ERFINDUNG

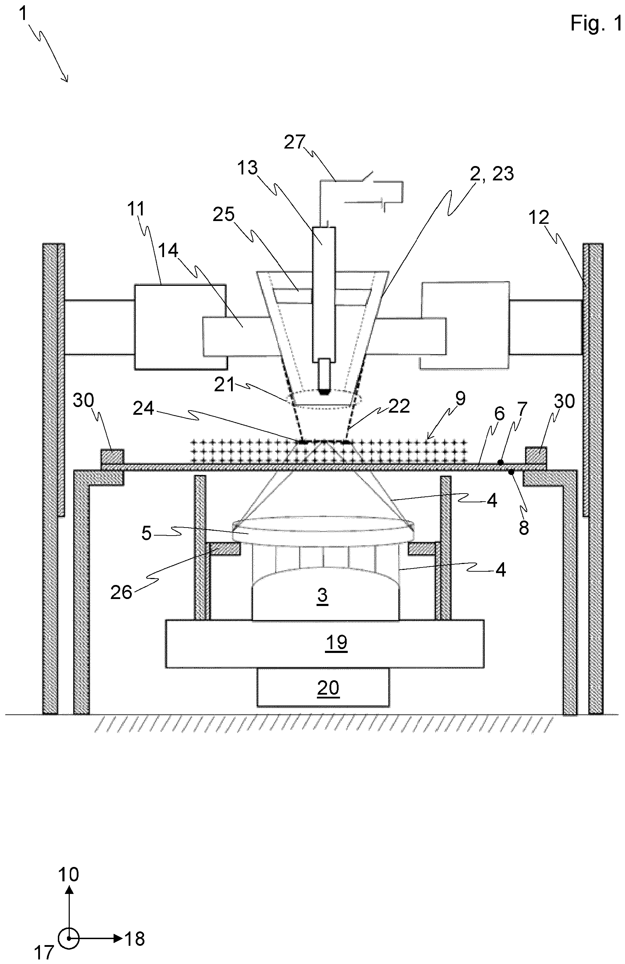

Fig. 1 zeigt eine erfindungsgemäße Vorrichtung 1 zur additiven Fertigung bzw. zum 3D-Drucken zumindest eines Werkstücks 2. Die Vorrichtung 1 umfasst eine Lichtquelle, die im dargestellten Ausführungsbeispiel durch eine Hochleistungs-Leuchtdiode (LED) 3 ausgebildet ist. Die LED 3 ist zur Abgabe von sichtbarem Licht 4 ausgelegt und ist am Markt z.B. mit 600 W oder 1000 W Leistung verfügbar. In der Vorrichtung 1 ist die LED 3 zur Abgabe des Lichts 4 in einem Betriebszustand der Vorrichtung 1 vorgesehen, wie in Fig. 1 illustriert ist (die Strahlen des Lichts 4 sind durch durchgezogene Linien angedeutet).

Die Vorrichtung 1 umfasst weiters ein Trägerelement 6, das im dargestellten Ausführungsbeispiel plattenförmig ausgebildet ist und aus einem Glas oder einer Glaskeramik gefertigt ist. Entsprechend ist das Trägerelement 6 für das Licht 4 der LED 3 durchlässig. Im gezeigten Betriebszustand der Vorrichtung 1 ist das Trägerelement 6 im Wesentlichen waagrecht bzw. parallel zur Horizontalen angeordnet, sodass auf einer Oberseite 7 des Trägerelements 6 ein aufschmelzbares Granulat, das im dargestellten Ausführungsbeispiel durch ein Metallpulver 9 gebildet ist, anordenbar ist.

Die erfindungsgemäße Vorrichtung 1 bildet gemeinsam mit dem Metallpulver 9 ein erfindungsgemäßes System aus.

Um chemische Reaktionen, insbesondere Oxidation, des Metallpulvers 9 bei der additiven Fertigung zu unterbinden, kann eine Schutzgaszuführung (nicht dargestellt) vorgesehen sein, die Schutzgas, insbesondere Argon, der Oberseite 7 des Trägerelements 6 und damit auch dem dort angeordneten Metallpulver 9 zuführt.

Im dargestellten Betriebszustand der Vorrichtung 1 ist der Strahlengang des Lichts 4 so, dass das Licht 4 mit zumindest einer Richtungskomponente parallel zu einer ersten Richtung 10, die von einer der Oberseite 7 gegenüberliegenden Unterseite 8 des Trägerelements 6 zur Oberseite 7 weist, von der Unterseite 8 auf das Trägerelement 6 trifft. Im dargestellten Ausführungsbeispiel wird dies dadurch gewährleistet, dass die LED 3 unter der Unterseite 8 bzw. in der ersten Richtung 10 gesehen vor der Unterseite 8 angeordnet ist. Es wäre aber natürlich auch denkbar, dass die LED 3 anders angeordnet ist und das Licht 4, z.B. mittels Spiegel und/oder Lichtwellenleiter und/oder sonstiger optischer Elemente, so umgelenkt und/oder transportiert wird, dass das Licht 4 schließlich von unten auf die Unterseite 8 trifft.

Die Vorrichtung umfasst 1 weiters eine Werkstückhalterung 11 zum Halten des Werkstücks 2, wobei die Werkstückhalterung 11 in der ersten Richtung 10 gesehen hinter der Oberseite 7 des Trägerelements 6, also über der Oberseite 7 des Trägerelements 6, angeordnet ist.

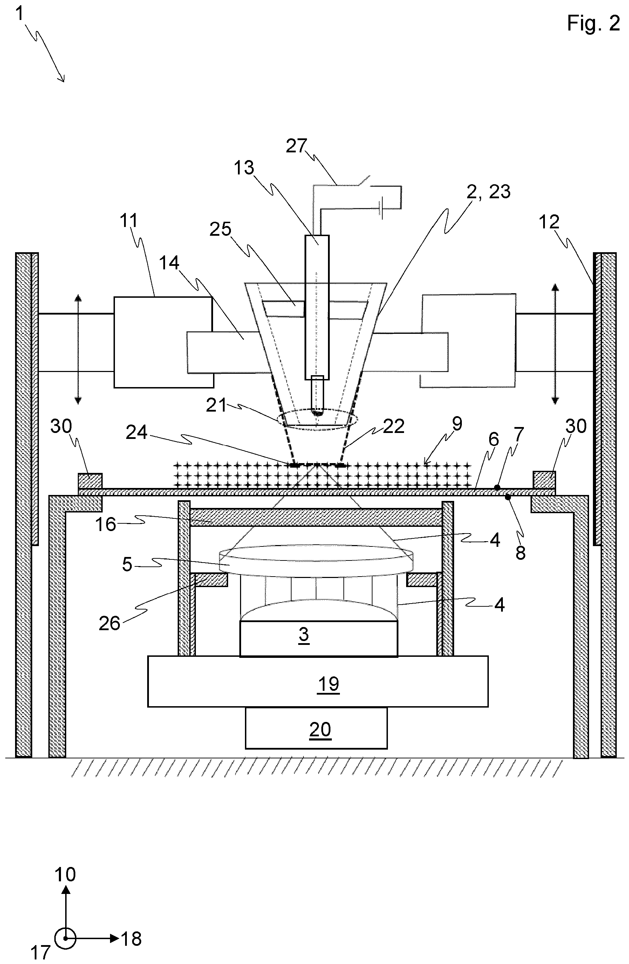

Im dargestellten Ausführungsbeispiel ist ein Linearantrieb 12 für die Werkstückhalterung 11 vorgesehen, mit dem die Werkstückhalterung 11 parallel und antiparallel zur ersten Richtung 10 verfahren bzw. bewegt werden kann (in Fig. 2 durch die Doppelpfeile angedeutet).

Weiters umfasst die Vorrichtung 1 mindestens ein Fokussiermittel, das im dargestellten Ausführungsbeispiel durch eine Fokussierlinse 5 ausgebildet ist, die zwischen der LED 3 und dem Trägerelement 6 angeordnet ist. Die Fokussierlinse 5 ist dazu eingerichtet, das Licht 4 in der ersten Richtung 10 gesehen hinter der Oberseite 7 des Trägerelements 6 zu fokussieren, um im Betriebszustand eine von der Oberseite 7 des Trägerelements 6 beabstandete aufzuschmelzende Schicht 24 des Metallpulvers 9 mit dem Licht 4 aufschmelzen zu können.

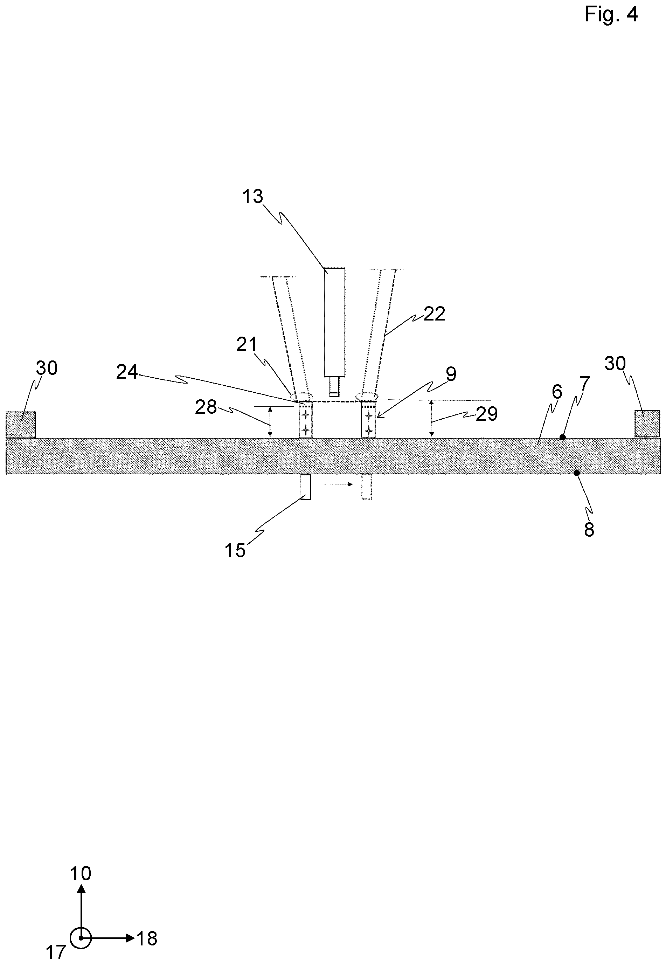

Typischerweise ist das Metallpulver 9 auf der Oberseite 7 mit einer Dicke 29 (vgl. Fig. 4) im Bereich von 20 µm bis 100 µm aufgetragen. Typischerweise ist ein Abstand 28 (vgl. Fig. 4) der aufzuschmelzenden Schicht 24 des Metallpulvers 9 von der Oberseite 7 dabei in einem Bereich von 15 µm bis 95 µm, beispielsweise 60 µm bis 75 µm. Die aufzuschmelzende Schicht 24 erstreckt sich in der ersten Richtung 10 gesehen von diesem Abstand 28 bis zur Dicke 29.

Zur Variation des Fokus' kann die Fokussierlinse 5 im dargestellten Ausführungsbeispiel parallel und antiparallel zur ersten Richtung 10 mittels eines Linearantriebs 26 verfahren werden. Typischerweise wird hierdurch die laterale Größe des beleuchteten Bereichs der aufzuschmelzenden Schicht 24 des Metallpulvers 9 zwischen 1 mm und 50 mm variiert.

Die Fertigung des Werkstücks 2 funktioniert mit der Vorrichtung 1 von oben nach unten, da das Werkstück 2 mit der Werkstückhalterung 11 unter Verwendung des Linearantriebs 12 von oben an das Metallpulver 9 - zumindest bis zur Kontaktierung des Metallpulvers 9 - herangeführt wird. Das Werkstück 2 befindet sich sodann in einer abgesenkten Position 22, die in Fig. 1 strichliert angedeutet ist.

Aufgrund der Schwerkraft kann kein Metallpulver 9 unbeabsichtigt an Stellen des bereits fertiggestellten Teils des Werkstücks 2 liegen bleiben. Nur aufgeschmolzenes Metallpulver 9, das vom bereits fertiggestellten Teil des Werkstücks 2 in der abgesenkten Position 22 kontaktiert wird, bleibt an diesem haften bzw. verbindet sich mit diesem.

Die Fokussierung bewirkt dabei einerseits, dass das Aufschmelzen des Metallpulvers 9 vorwiegend in einer obersten, dem Werkstück 2 bzw. der Werkstückhalterung 11 zugewandten und nächstliegenden Schicht 24 stattfindet. Diese von der Oberseite 7 des Trägerelements 6 beabstandete Schicht 24 umfasst die als nächstes aufzubringende Lage bzw. wird die als nächstes aufzubringende Lage durch diese Schicht 24 ausgebildet. Entsprechend wird das Anhaften/Ankleben/Verschweißen des aufgeschmolzenen Metallpulvers 9 auf/mit dem bereits hergestellten Teil des Werkstücks 2 ermöglicht.

Andererseits wird aufgrund der Fokussierung Metallpulver 9, das unter der aufzuschmelzenden Schicht 24 liegt, nicht aufgeschmolzen. Entsprechend wird ein unerwünschtes Anhaften/Ankleben/Verschweißen des Metallpulvers 9 an/mit der Oberseite 7 des Trägerelements 6 vermieden.

Um das unerwünschte Anhaften/Ankleben/Verschweißen des Metallpulvers 9 an/mit der Oberseite 7 des Trägerelements 6 vollends auszuschließen, ist im dargestellten Ausführungsbeispiel eine Kühlung 30 des Trägerelements 6 vorgesehen, wobei die Kühlung 30 konkret als Flüssigkeitskühlung in einem Randbereich des Trägerelements 6 ausgeführt ist. Über Wärmeleitung wird das gesamte Trägerelement 6 entsprechend gekühlt und kühlt das Trägerelement 6 seinerseits die unmittelbar auf der Oberseite 7 aufliegende Schicht des Metallpulvers 9, wodurch ein Aufschmelzen dieser Schicht besonders wirkungsvoll verhindert wird.

Nachdem eine Lage auf das Werkstück 2 aufgetragen worden ist, wird das Werkstück 2 mit der Werkstückhalterung 11 bzw. dem Linearantrieb 12 typischerweise etwas abgehoben, um ggf. neues Metallpulver 9 für die Aufbringung der nächsten Lage am Trägerelement 6 bzw. auf dessen Oberseite 7 anordnen zu können. Das Werkstück 2 befindet sich sodann in einer abgehobenen Position 23, die in Fig. 1 illustriert ist.

Anschließend beginnt das Auftragen der nächsten Lage auf das Werkstück 2 analog zum Auftragen der vorherigen Lage, wobei das Werkstück 2 wieder in die abgesenkte Position 22 bzw. an das Metallpulver 9 auf der Oberseite 7 des Trägerelements 6 - zumindest bis zur Kontaktierung des Metallpulvers 9 - herangeführt wird und die im Bereich des Werkstücks 2 liegende Schicht 24 des Metallpulvers 9 aufgeschmolzen wird.

Ggf. kann beim Auftragen einer Lage das Werkstück 9 auch etwas in das Metallpulver 9 hineingedrückt werden (d.h. das Werkstück 2 wird in diesem Fall für den Auftrag der nächsten Lage nicht bloß bis zur Kontaktierung des Metallpulvers 9 an dieses angenähert, sondern drückt in der abgesenkten Position 22 gegen bzw. in das Metallpulver 9).

Durch die genannte Einstellung des Fokus` lassen sich grobe Strukturen des zu fertigenden Werkstücks 2, insbesondere Wandstärken, bereits genau definieren - ohne zusätzliche Hilfsmittel.

Um die LED 3 in einer normal auf die erste Richtung 10 stehenden Ebene bewegen zu können, ist die LED 3 im gezeigten Ausführungsbeispiel auf einer Plattform 19 angeordnet, welche Plattform 19 mittels einer Antriebseinheit 20 in einer zweiten Richtung 17 und einer dritten Richtung 18 verfahrbar ist. Die zweite Richtung 17 und die dritte Richtung 18 spannen die auf die erste Richtung 10 normal stehende Ebene auf, wobei die erste Richtung 10, die zweite Richtung 17 und die dritte Richtung 18 wechselseitig normal aufeinander stehen. Durch die Bewegung bzw. Positionierung der LED 3 in besagter Ebene kann der lateralen Struktur, z.B. einem Wandverlauf, des herzustellenden Werkstücks 2 Rechnung getragen werden, indem aus der aufzuschmelzenden Schicht 24 des Metallpulvers 9 entsprechende laterale Bereiche aufgeschmolzen werden, die auf den bereits fertiggestellten Teil des Werkstücks 2 im nächsten Schritt aufgebracht werden.

Im gezeigten Ausführungsbeispiel ist die Fokussierlinse 5 samt ihrem Linearantrieb 26 ebenfalls auf der Plattform 19 montiert und wird entsprechend gemeinsam mit der LED 3 parallel und antiparallel zur zweiten Richtung 17 und/oder dritten Richtung 18 mitbewegt, wenn die Plattform 19 verfahren wird.

Im gezeigten Ausführungsbeispiel umfasst die Vorrichtung 1 weiters eine Vorwärmeinheit 13, um das Werkstück 2 in einem dem Trägerelement 6 zugewandten Endbereich 21 des Werkstücks 2 zu erwärmen. Mittels der Vorwärmeinheit 13 kann das Werkstück 2 im Endbereich 21 auf eine Temperatur knapp unterhalb der Schmelztemperatur des Metallpulvers 9 aufgewärmt werden.

Wenn kein Aufheizen der aufzuschmelzenden Schicht 24 mit dem Licht 4 stattfinden würde, würde diese Schicht 24 durch das vorgewärmte Werkstück 2 ebenfalls auf eine Temperatur knapp unter der Schmelztemperatur des Metallpulvers 9 erwärmt werden (maximal bis zur Temperatur des vorgewärmten Werkstücks 2; i.A. auf eine etwas geringere Temperatur als jene des vorgewärmten Werkstücks 2), wenn das vorgewärmte Werkstück 2 an das Metallpulver 9 zumindest bis zu dessen Kontaktierung in die abgesenkte Position 22 herangeführt ist und so Wärme auf das Metallpulver 9 überträgt. Entsprechend ist der Temperaturunterschied, der durch das weitere Aufheizen mittels des Lichts 4 noch überwunden werden muss, relativ klein, was das Aufschmelzen begünstigt.

Weiters wird durch die Vorwärmung des Endbereichs 21 des Werkstücks 2 ein optimales Anhaften bzw. Verbinden der aufgeschmolzenen Schicht 24 am vorgewärmten Endbereich 21 begünstigt.

Im dargestellten Ausführungsbeispiel umfasst die Vorwärmeinheit 13 ein elektrisches Heizelement, dessen Energieversorgung durch die elektrische Schaltung 27 in Fig. 1 angedeutet ist. Die Vorwärmeinheit 13 gibt dabei die Wärme an das Werkstück 2 über Wärmestrahlung und Wärmeleitung ab.

Die Vorwärmeinheit 13 ist mit einer Halterung 25 gehalten, die vorzugsweise eine relative Bewegung der Vorwärmeinheit 13 zur Werkstückhalterung 11 - und somit zum Werkstück 2 - gestattet (nicht dargestellt).

Im dargestellten Ausführungsbeispiel weist das Werkstück 2 bzw. dessen bereits fertiggestellter Teil die Form eines hohlen Drehkegels auf. Dies ermöglicht die Anordnung der Vorwärmeinheit 13 innerhalb des Werkstücks 2, was wiederum die gezielte Vorwärmung des Endbereichs 21 begünstigt.

Im dargestellten Ausführungsbeispiel sind Abschlusselemente 14 in die Werkstückhalterung 11 integriert. Diese sind lateral bzw. normal auf die erste Richtung 10, insbesondere parallel und antiparallel zur zweiten Richtung 17 und/oder zur dritten Richtung 18, bewegbar (nicht dargestellt), um am Werkstück 2 im Wesentlichen dicht anliegend angeordnet zu werden, wobei sie im dargestellten Ausführungsbeispiel nicht nur am Werkstück 2 anliegen, sondern gegen das Werkstück 2 drücken, um dieses festzuklemmen und so zu halten.

Dies ermöglicht es, den (bereits fertiggestellten) Teil des Werkstücks 2 der auf der vom Trägerelement 6 abgewandten Seite der Abschlusselemente 14 liegt, weiter zu bearbeiten, noch während die additive Fertigung des restlichen Werkstücks 2 läuft und ohne dass die additive Fertigung des restlichen Werkstücks 2 von der Weiterbearbeitung beeinträchtigt wird. Die Weiterbearbeitung kann dabei beispielsweise umfassen: Fräsen, Bohren, Gewinden, Schleifen, Beschichten (insbesondere Lackieren) etc. Entsprechende Weiterbearbeitungsmittel können vorgesehen sein (nicht dargestellt).

Aufgrund ihrer Integration in die Werkstückhalterung 11 werden die Abschlusselemente 14 klarerweise mit der restlichen Werkstückhalterung 11 mitbewegt, wenn diese mit dem Linearantrieb 12 bewegt wird.

Das in Fig. 2 gezeigte Ausführungsbeispiel unterscheidet sich von jenem der Fig. 1 dadurch, dass zusätzlich eine Maskeneinheit mit einer Flüssigkristallmaske 16 vorgesehen ist, die in der ersten Richtung 10 gesehen so vor der Unterseite 8 des Trägerelements 6 angeordnet ist, dass im Betriebszustand die Flüssigkristallmaske 16 im Strahlengang des Lichts 4 angeordnet ist, um die Beleuchtung lediglich eines oder mehrerer bestimmter Abschnitte des Metallpulvers 9 auf der Oberseite 7 des Trägerelements 6 zu ermöglichen. Hierdurch können gezielt sehr feine laterale Bereiche der aufzuschmelzenden Schicht 24 aufgeschmolzen werden bzw. können so sehr feine Strukturen des Werkstücks 2 schichtweise hergestellt werden. Diese feinen Bereiche bzw. Strukturen können deutlich geringere laterale Abmessungen aufweisen als Bereiche bzw. Strukturen, die ohne Flüssigkristallmaske 16 nur durch Variation des Fokus' des Lichts 4 herstellbar sind.

Die Flüssigkristallmaske 16 kann leicht, bevorzugt automatisiert, besonders bevorzugt dynamisch, geändert bzw. angepasst werden, um ungewünschte Bereiche im Strahlengang abzudunkeln und so nur gewünschte (laterale) Bereiche der aufzuschmelzenden Schicht 24 des Metallpulvers 9 zu beleuchten. Entsprechend kann eine Steuereinheit zur Ansteuerung der Flüssigkristallmaske 16 vorgesehen sein (nicht dargestellt).

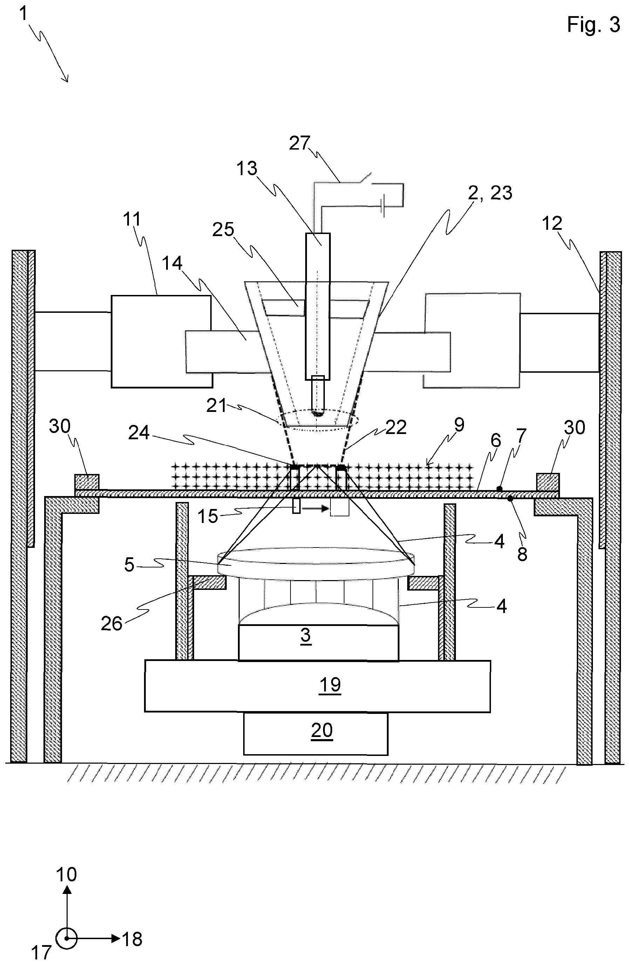

Das in Fig. 3 gezeigte Ausführungsbeispiel unterscheidet sich von jenem der Fig. 1 dadurch, dass zusätzlich ein elektrostatisches Positioniermittel in Form eines Aufladestabs 15 vorgesehen ist, um Metallpulver 9 elektrostatisch auf dem Trägerelement 6 einstellbar zu positionieren. Hierdurch kann das Metallpulver 9 gezielt so auf der Oberseite 7 des Trägerelements 6 angeordnet werden, dass die laterale Struktur der nächsten auf das Werkstück 2 aufzubringenden Lage wiedergegeben wird. Entsprechend kann die Menge an Metallpulver 9, das für die Herstellung der nächsten Lage des Werkstücks 2 auf der Oberseite 7 des Trägerelements 6 angeordnet werden muss, weiter verringert werden, was Material und Kosten spart. Dies ist in der Detailansicht der Fig. 4 verdeutlicht.

Weiters ist die Ausbildung sehr feiner Strukturen durch den Aufladestab 15 möglich. Diese feinen Bereiche bzw. Strukturen können deutlich geringere laterale Abmessungen aufweisen als Bereiche bzw. Strukturen, die ohne Aufladestab 15 nur durch Variation des Fokus' des Lichts 4 herstellbar sind.

Das Aufschmelzen kann sodann besonders einfach durchgeführt werden, indem der Fokus so groß gewählt wird, dass einfach das gesamte positionierte Metallpulver 9 beleuchtet wird.

Aus der Detaildarstellung der Fig. 4 geht weiters besonders klar hervor, dass der Aufladestab 15 unter dem Trägerelement 6, genauer in erster Richtung 10 gesehen unmittelbar vor dem Trägerelement 6, angeordnet ist. Hierdurch ist eine beliebige Positionierung des Aufladestabs 15 bequem möglich, und gleichzeitig kann das Metallpulver 9 ungestört der Oberseite 7 des Trägerelements 6 zugeführt werden bzw. wird auch die Anordnung der Werkstückhalterung 11 durch den Aufladestab 15 nicht beeinflusst.

Entsprechend ist es im gezeigten Ausführungsbeispiel außerdem vorgesehen, dass der Aufladestab 15 bewegbar ist, was in Fig. 3 und Fig. 4 durch den zu einer weiteren Position des Aufladestabs 15 weisenden Pfeil angedeutet ist. Die Bewegung kann dabei insbesondere parallel und antiparallel zur zweiten Richtung 17 und/oder dritten Richtung 18 erfolgen.

Weiters kann die Bewegung des Aufladestabs 15 automatisiert erfolgen, wodurch das Metallpulver 9 besonders rasch und genau gezielt an den gewünschten Stellen auf der Oberseite 7 des Trägerelements 6 angeordnet werden kann.

### BEZUGSZEICHENLISTE

- 1: Vorrichtung
- 2: Werkstück
- 3: LED
- 4: Licht
- 5: Fokussierlinse
- 6: Trägerelement
- 7: Oberseite des Trägerelements
- 8: Unterseite des Trägerelements
- 9: Metallpulver
- 10: Erste Richtung
- 11: Werkstückhalterung
- 12: Linearantrieb der Werkstückhalterung
- 13: Vorwärmeinheit
- 14: Abschlusselement
- 15: Aufladestab
- 16: Flüssigkristallmaske
- 17: Zweite Richtung
- 18: Dritte Richtung
- 19: In der zweiten und dritten Richtung verfahrbare Plattform
- 20: Antriebseinheit für die Plattform
- 21: Vorgewärmter Endbereich
- 22: Abgesenkte Position des Werkstücks
- 23: Abgehobene Position des Werkstücks
- 24: Aufzuschmelzende Schicht des Metallpulvers
- 25: Halterung der Vorwärmeinheit
- 26: Linearantrieb der Fokussierlinse
- 27: Elektrische Schaltung zur Energieversorgung der Vorwärmeinheit
- 28: Abstand zwischen der Oberseite des Trägerelements und der aufzuschmelzenden Schicht des Metallpulvers
- 29: Dicke der Pulverschicht über der Oberseite des Trägerelements
- 30: Kühlung des Trägerelements

## Patentansprüche

1. Vorrichtung (1) zur additiven Fertigung zumindest eines Werkstücks (2), die Vorrichtung (1) umfassend zumindest eine Lichtquelle (3) zur Abgabe von Licht (4) in einem Betriebszustand der Vorrichtung (1), ein Trägerelement (6), das für das Licht (4) der Lichtquelle (3) durchlässig ist und im Betriebszustand im Wesentlichen waagrecht angeordnet ist, sodass auf einer Oberseite (7) des Trägerelements (6) ein aufschmelzbares Granulat (9) anordenbar ist, wobei im Betriebszustand der Strahlengang des Lichts (4) so ist, dass das Licht (4) mit zumindest einer Richtungskomponente parallel zu einer ersten Richtung (10), die von einer der Oberseite (7) gegenüberliegenden Unterseite (8) des Trägerelements (6) zur Oberseite (7) weist, von der Unterseite (8) auf das Trägerelement (6) trifft, die Vorrichtung (1) weiters umfassend eine Werkstückhalterung (11), die in der ersten Richtung (10) gesehen hinter der Oberseite (7) des Trägerelements (6) angeordnet ist, wobei das Trägerelement (6) und/oder die Werkstückhalterung (11) mittels mindestens eines Verschiebemittels (12) mit zumindest einer Richtungskomponente parallel und antiparallel zur ersten Richtung (10) bewegbar ist/sind, die Vorrichtung (1) weiters umfassend mindestens ein Fokussiermittel (5), das dazu eingerichtet ist, das Licht (4) in der ersten Richtung (10) gesehen hinter der Oberseite (7) des Trägerelements (6) zu fokussieren, um im Betriebszustand eine von der Oberseite (7) des Trägerelements (6) beabstandete Schicht (24) des Granulats (9) mit dem Licht (4) aufschmelzen zu können, **dadurch gekennzeichnet, dass** ein oder mehrere Abschlusselemente (14) vorgesehen sind, die mit zumindest einer Richtungskomponente normal auf die erste Richtung (10) bewegbar sind, um am Werkstück (2) im Wesentlichen dicht anliegend angeordnet zu werden.

2. Vorrichtung (1) nach Anspruch 1, **dadurch gekennzeichnet, dass** das mindestens eine Fokussiermittel (5) dazu eingerichtet ist, den Fokus des Lichts (4) variabel einzustellen.

3. Vorrichtung (1) nach Anspruch 2, **dadurch gekennzeichnet, dass** das mindestens eine Fokussiermittel mindestens eine Fokussierlinse (5) umfasst, die zwischen der Lichtquelle (3) und dem Trägerelement (6) angeordnet ist, wobei die Fokussierlinse (5) mit zumindest einer Richtungskomponente parallel und antiparallel zur ersten Richtung (10) verschiebbar ist.

4. Vorrichtung (1) nach einem der Ansprüche 1 bis 3, **dadurch gekennzeichnet, dass** die mindestens eine Lichtquelle durch eine LED (3) oder mehrere LEDs (3) ausgebildet ist.

5. Vorrichtung (1) nach einem der Ansprüche 1 bis 4, **dadurch gekennzeichnet, dass** die mindestens eine Lichtquelle (3) zur Abgabe von sichtbarem Licht (4) ausgebildet ist.

6. Vorrichtung (1) nach einem der Ansprüche 1 bis 5, **dadurch gekennzeichnet, dass** die mindestens eine Lichtquelle (3), vorzugsweise gemeinsam mit dem mindestens einen Fokussiermittel (5), bewegbar ist, insbesondere in einer auf die erste Richtung (10) normal stehenden Ebene und/oder parallel und antiparallel zur ersten Richtung (10) .

7. Vorrichtung (1) nach einem der Ansprüche 1 bis 6, **dadurch gekennzeichnet, dass** das Trägerelement (6) als Platte, vorzugsweise aus einem Glas oder einer Glaskeramik, ausgebildet ist.

8. Vorrichtung (1) nach einem der Ansprüche 1 bis 7, **dadurch gekennzeichnet, dass** eine Kühlung (30) für das Trägerelement (6) vorgesehen ist.

9. Vorrichtung (1) nach einem der Ansprüche 1 bis 8, **dadurch gekennzeichnet, dass** mindestens ein elektrostatisches Positioniermittel (13) vorgesehen ist, um das Granulat (9) elektrostatisch auf dem Trägerelement (6) einstellbar zu positionieren, wobei das Trägerelement (6) vorzugsweise zwischen dem mindestens einen elektrostatischen Positioniermittel (13) und der Werkstückhalterung (11) angeordnet ist.

10. Vorrichtung (1) nach Anspruch 9, **dadurch gekennzeichnet, dass** das mindestens eine elektrostatische Positioniermittel (13) bewegbar ist, insbesondere in einer auf die erste Richtung (10) normal stehenden Ebene und/oder parallel und antiparallel zur ersten Richtung (10) .

11. Vorrichtung (1) nach einem der Ansprüche 1 bis 10, **dadurch gekennzeichnet, dass** eine, vorzugsweise relativ zur Werkstückhalterung (11) bewegbare, Vorwärmeinheit (13) vorgesehen ist, um das Werkstück (2), insbesondere in einem dem Trägerelement (6) zugewandten Endbereich (21) des Werkstücks (2), zu erwärmen.

12. Vorrichtung (1) nach einem der Ansprüche 1 bis 11, **dadurch gekennzeichnet, dass** das Abschlusselement (14) oder die Abschlusselemente (14) in die Werkstückhalterung (11) integriert sind.

13. Vorrichtung (1) nach einem der Ansprüche 1 bis 12, **dadurch gekennzeichnet, dass** mindestens ein Weiterbearbeitungsmittel zur Weiterbearbeitung eines bereits gefertigten Abschnitts des Werkstücks (2) vorgesehen ist, wobei das mindestens eine Weiterbearbeitungsmittel in der ersten Richtung (10) gesehen hinter dem Abschlusselement (14) oder den Abschlusselementen (14) angeordnet ist.

14. Vorrichtung (1) nach einem der Ansprüche 1 bis 13, **dadurch gekennzeichnet, dass** mindestens eine, vorzugsweise gekühlte, Maskeneinheit (16) vorgesehen ist, die in der ersten Richtung (10) gesehen so vor der Unterseite (8) des Trägerelements (6) angeordnet ist, dass im Betriebszustand die Maskeneinheit (16) im Strahlengang des Lichts (4) angeordnet ist, um die Beleuchtung lediglich eines oder mehrerer bestimmter Abschnitte des Granulats (9) auf der Oberseite (7) des Trägerelements (6) zu ermöglichen.

15. Vorrichtung (1) nach einem der Ansprüche 1 bis 14, **dadurch gekennzeichnet, dass** eine Schutzgaszuführung vorgesehen ist, mit der Schutzgas der Oberseite (7) des Trägerelements (6) zuführbar ist.

## Claims

1. Apparatus (1) for the additive manufacture of at least one workpiece (2), the apparatus (1) comprising at least one light source (3) for emitting light (4) in an operating state of the apparatus (1), a support element (6) which is transmissive to the light (4) of the light source (3) and is arranged essentially horizontally in the operating state, so that fusible granules (9) can be arranged on an upper side (7) of the support element (6), wherein the beam path of the light (4) in the operating state is such that the light (4) impinges on the support element (6) from an underside (8) with at least one directional component parallel to a first direction (10), which faces from the underside (8) of the support element (6) opposite the upper side (7) to the upper side (7), the apparatus (1) further comprising a workpiece holder (11), which, as viewed in the first direction (10), is arranged behind the upper side (7) of the support element (6), wherein the support element (6) and/or the workpiece holder (11) are movable by means of at least one displacement means (12) with at least one directional component parallel and antiparallel to the first direction (10), the apparatus (1) further comprising at least one focusing means (5) which is adapted to focus the light (4), as viewed in the first direction (10), behind the upper side (7) of the support element (6) in order to be able to melt a layer (24) of the granules (9) spaced from the upper side (7) of the support element (6) with the light (4) in the operating state, **characterized in that** one or more end elements (14) are provided which can be moved with at least one directional component perpendicular to the first direction (10) in order to be arranged in substantially close contact with the workpiece (2).

2. Apparatus (1) according to claim 1, **characterized in that** the at least one focusing means (5) is adapted to variably adjust the focus of the light (4).

3. Apparatus (1) according to claim 2, **characterized in that** the at least one focusing means comprises at least one focusing lens (5) which is arranged between the light source (3) and the support element (6), wherein the focusing lens (5) is displaceable with at least one directional component parallel and antiparallel to the first direction (10).

4. Apparatus (1) according to one of claims 1 to 3, **characterized in that** the at least one light source is formed by one LED (3) or a plurality of LEDs (3).

5. Apparatus (1) according to one of claims 1 to 4, **characterized in that** the at least one light source (3) is designed to emit visible light (4).

6. Apparatus (1) according to one of claims 1 to 5, **characterized in that** the at least one light source (3), preferably together with the at least one focusing means (5), is movable, in particular in a plane perpendicular to the first direction (10) and/or parallel and antiparallel to the first direction (10).

7. Apparatus (1) according to one of claims 1 to 6, **characterized in that** the support element (6) is designed as a panel, preferably made of a glass or a glass ceramic.

8. Apparatus (1) according to one of claims 1 to 7, **characterized in that** cooling (30) is provided for the support element (6).

9. Apparatus (1) according to one of claims 1 to 8, **characterized in that** at least one electrostatic positioning means (13) is provided in order to position the granules (9) electrostatically on the support element (6) in an adjustable manner, wherein the support element (6) is preferably arranged between the at least one electrostatic positioning means (13) and the workpiece holder (11).

10. Apparatus (1) according to claim 9, **characterized in that** the at least one electrostatic positioning means (13) is movable, in particular in a plane perpendicular to the first direction (10) and/or parallel and antiparallel to the first direction (10).

11. Apparatus (1) according to one of claims 1 to 10, **characterized in that** a preheating unit (13), preferably movable relative to the workpiece holder (11), is provided in order to heat the workpiece (2), in particular in an end region (21) of the workpiece (2) facing the support element (6).

12. Apparatus (1) according to one of claims 1 to 11, **characterized in that** the end element (14) or the end elements (14) are integrated into the workpiece holder (11).

13. Apparatus (1) according to one of claims 1 to 12, **characterized in that** at least one further processing means is provided for further processing an already manufactured section of the workpiece (2), wherein the at least one further processing means is arranged behind the end element (14) or the end elements (14) as seen in the first direction (10).

14. Apparatus (1) according to one of claims 1 to 13, **characterized in that** at least one, preferably cooled, mask unit (16) is provided, which is arranged in front of the underside (8) of the support element (6) as seen in the first direction (10) in such a way that, in the operating state, the mask unit (16) is arranged in the beam path of the light (4) in order to enable the illumination of only one or more specific sections of the granules (9) on the upper side (7) of the support element (6).

15. Apparatus (1) according to one of claims 1 to 14, **characterized in that** a protective gas supply is provided, with which protective gas can be supplied to the upper side (7) of the support element (6).

## Revendications

1. Dispositif (1) pour la fabrication par addition de matière d'au moins une pièce d'oeuvre (2), lequel dispositif (1) comprend au moins une source lumineuse (3) destinée à émettre de la lumière (4) dans un état de fonctionnement du dispositif (1), un élément de support (6) qui laisse passer la lumière (4) de la source lumineuse (3) et qui est disposé sensiblement à l'horizontale dans l'état de fonctionnement, de sorte que des granulés fusibles (9) peuvent être disposés sur une face supérieure (7) de l'élément de support (6), le trajet des rayons de la lumière (4) dans l'état de fonctionnement étant tel que la lumière (4) atteint l'élément de support (6) par une face inférieure (8) avec au moins une composante directionnelle parallèle à une première direction (10) allant de la face inférieure (8) de l'élément de support (6) opposée à la face supérieure (7) vers la face supérieure (7), le dispositif (1) comprenant en outre une fixation de pièce d'oeuvre (11) qui est disposée, vue dans la première direction (10), derrière la face supérieure (7) de l'élément de support (6), l'élément de support (6) et/ou la fixation de pièce d'oeuvre (11) pouvant être déplacés au moyen d'au moins un moyen de translation (12) avec au moins une composante directionnelle dans un sens parallèle et antiparallèle à la première direction (10), le dispositif (1) comprenant en outre au moins un moyen de focalisation (5) configuré pour focaliser la lumière (4), vue dans la première direction (10), derrière la face supérieure (7) de l'élément de support (6) afin de pouvoir faire fondre une couche (24) de granulés (9) éloignée de la face supérieure (7) de l'élément de support (6) dans l'état de fonctionnement, **caractérisé en ce que** sont prévus un ou plusieurs éléments de fermeture (14) qui peuvent être déplacés avec au moins une composante directionnelle perpendiculaire à la première direction (10) pour être disposés sur la pièce d'oeuvre (2) de manière sensiblement étanche.

2. Dispositif (1) selon la revendication 1, **caractérisé en ce que** l'au moins un moyen de focalisation (5) est configuré pour ajuster la focale de la lumière (4) de façon variable.

3. Dispositif (1) selon la revendication 2, **caractérisé en ce que** l'au moins un moyen de focalisation comprend au moins une lentille de focalisation (5) qui est disposée entre la source lumineuse (3) et l'élément de support (6), la lentille de focalisation (5) pouvant être déplacée avec au moins une composante directionnelle parallèle et antiparallèle à la première direction (10).

4. Dispositif (1) selon l'une des revendications 1 à 3, **caractérisé en ce que** l'au moins une source lumineuse est formée par une DEL (3) ou plusieurs DEL (3).

5. Dispositif (1) selon l'une des revendications 1 à 4, **caractérisé en ce que** l'au moins une source lumineuse (3) est conçue pour émettre de la lumière (4) visible.

6. Dispositif (1) selon l'une des revendications 1 à 5, **caractérisé en ce que** l'au moins une source lumineuse (3) peut être déplacée, de préférence en même temps que l'au moins un moyen de focalisation (5), en particulier dans un plan perpendiculaire à la première direction (10) et/ou de façon parallèle et antiparallèle à la première direction (10).

7. Dispositif (1) selon l'une des revendications 1 à 6, **caractérisé en ce que** l'élément de support (6) est conformé comme une plaque, de préférence en verre ou en vitrocéramique.

8. Dispositif (1) selon l'une des revendications 1 à 7, **caractérisé en ce qu'**un refroidissement (30) est prévu pour l'élément de support (6).

9. Dispositif (1) selon l'une des revendications 1 à 8, **caractérisé en ce qu'**au moins un moyen de positionnement électrostatique (13) est prévu pour positionner les granulés (9) sur l'élément de support (6) par une action électrostatique avec possibilité d'ajustement, l'élément de support (6) étant de préférence disposé entre l'au moins un moyen de positionnement électrostatique (13) et la fixation de pièce d'oeuvre (11).

10. Dispositif (1) selon la revendication 9, **caractérisé en ce que** l'au moins un moyen de positionnement électrostatique (13) est déplaçable, en particulier dans un plan perpendiculaire à la première direction (10) et/ou de façon parallèle et antiparallèle à la première direction (10).

11. Dispositif (1) selon l'une des revendications 1 à 10, **caractérisé en ce qu'**une unité de préchauffage (13), de préférence déplaçable par rapport à la fixation de pièce d'oeuvre (11), est prévue pour chauffer la pièce d'oeuvre (2), en particulier dans une partie d'extrémité (21) de la pièce d'oeuvre (2) tournée vers l'élément de support (6).

12. Dispositif (1) selon l'une des revendications 1 à 11, **caractérisé en ce que** l'élément de fermeture (14) ou les éléments de fermeture (14) sont intégrés dans la fixation de pièce d'oeuvre (11).

13. Dispositif (1) selon l'une des revendications 1 à 12, **caractérisé en ce qu'**au moins un moyen de post-traitement est prévu pour le post-traitement d'une partie déjà fabriquée de la pièce d'oeuvre (2), l'au moins un moyen de post-traitement étant disposé, vu dans la première direction (10), derrière l'élément de fermeture (14) ou les éléments de fermeture (14).

14. Dispositif (1) selon l'une des revendications 1 à 13, **caractérisé en ce qu'**est prévue au moins une unité de masque (16), de préférence refroidie, qui est disposée, dans la première direction (10), avant la face inférieure (8) de l'élément de support (6), de telle manière que, dans l'état de fonctionnement, l'unité de masque (16) soit disposée dans le trajet des rayons de la lumière (4) afin de ne permettre l'exposition que d'une ou plusieurs zones déterminées des granulés (9) sur la face supérieure (7) de l'élément de support (6).

15. Dispositif (1) selon l'une des revendications 1 à 14, **caractérisé en ce qu'**est prévue une arrivée de gaz protecteur avec laquelle un gaz protecteur peut être amené à la face supérieure (7) de l'élément de support (6).
